# EUROPÄISCHE PATENTSCHRIFT

(11) **EP 1 770 320 B1**
(45) Veröffentlichungstag und Bekanntmachung des Hinweises auf die Patenterteilung: **30.04.2008**
(21) Anmeldenummer: 06121432.6
(22) Anmeldetag: 28.09.2006
(51) Int. Cl.: F16L 37/088

(54) **Lösbare Steckverbindung für Rohrleitungen**
Releasable plug-in coupling for pipes
Raccord détachable à fiche pour des tuyaux

(30) Priorität: 29.09.2005 DE 102005046886
(43) Veröffentlichungstag der Anmeldung: 04.04.2007
(73) Patentinhaber: Johannes Schäfer vormals Stettiner Schraubenwerke GmbH & Co. KG, 35410 Hungen (DE)
(72) Erfinder: Funk, Hans-Georg, 35410 Hungen (DE); Neumann, Frank, 35410 Hungen (DE); Schäfer, Johannes, 35392 Gießen (DE)
(74) Vertreter: Haar, Lucas Heinz Jörn

(56) Entgegenhaltungen:
- EP-A1- 0 226 689
- EP-A1- 0 766 033
- WO-A-97/13094
- WO-A-03/042591
- WO-A-20/05075876
- DE-A1- 19 626 016
- DE-A1- 19 932 307

## Beschreibung

Die Erfindung betrifft eine lösbare Steckverbindung für Rohrleitungen der im Oberbegriff des Anspruchs 1 angegebenen Art.

Bei einer aus der DE 199 32 307 A1 bekannten Steckverbindung dieser Art wird der Steckzapfen durch einen federnden Haltering in der in die Bohrung des Außenteils eingesteckten Verriegelungsposition festgehalten. Um Steckzapfen und Außenteil wieder voneinander trennen zu können, ist auf dem Steckzapfen eine Entriegelungshülse vorgesehen, die in die Bohrung im Außenteil hineinbewegbar ist und auf den Haltering derart einwirkt, dass der Steckzapfen gelöst werden kann. Bei Steckverbindungen dieser Art besteht das Problem, dass von außen nicht leicht festgestellt werden kann, ob der eingesteckte Steckzapfen ordnungsgemäß im Außenteil verriegelt ist. Ist beispielsweise der Steckzapfen versehentlich nicht tief genug in das Außenteil hineingedrückt worden und daher nicht vollständig in die Verriegelungsstellung gelangt, so besteht die Gefahr, dass er sich bei Druckbeaufschlagung des durch die Steckverbindung geschlossenen Leitungssystems wieder löst und dadurch Schäden verursacht.

Eine Steckkupplung, die einen derartigen Nachteil vermeiden und sich durch eine höhere Zuverlässigkeit auszeichnen soll, ist aus EP 0 226 689 B1 bekannt. Bei der bekannten Steckkupplung weist der Steckzapfen zwei in einem axialen Abstand voneinander angeordnete Ringnuten auf, in die das in eine Ausnehmung im Außenteil angeordnete federnde Halteelement einrasten kann, wobei die druckdichte Verbindung zwischen Steckzapfen und Außenteil erst erreicht wird, wenn das Halteelement in die in Steckrichtung hintere Nut des Steckzapfens eingerastet ist. Wird diese Verriegelungsstellung nicht erreicht und das System mit Druck beaufschlagt, so hält das Halteelement durch Einrasten in die vordere Nut den Steckzapfen fest. Gleichzeitig macht die undichte Verbindung zwischen Steckzapfen und Außenteil durch das Austreten von Druckmittel auf den Defekt aufmerksam. Bei dieser bekannten Steckverbindung ist das federnde Halteelement durch eine radiale Öffnung in die Ausnehmung im Außenteil eingesetzt und muss zum Lösen der Steckverbindung mit Hilfe geeigneter Werkzeuge durch diese Öffnung entfernt werden. Weiterhin greift das Halteelement nur in einem begrenzten Umfangsbereich in die Nut des Steckzapfens ein, so dass keine hohen Haltekräfte aufgenommen werden können.

Aufgabe der Erfindung ist es, eine Steckverbindung der eingangs genannten Art zu schaffen, die das Erkennen unvollständiger Steckpositionen ermöglicht und selbsttätiges Lösen eines unvollständig gesteckten Steckzapfens verhindert. Weiterhin soll die Steckverbindung einfach und kostengünstig herstellbar und zur Aufnahme hoher Haltekräfte geeignet sein.

Bei der erfindungsgemäß Steckverbindung weist der Steckzapfen in Steckrichtung vor der ersten Schulter eine zweite ringförmige Ausnehmung und vor dieser eine zweite ringförmige, beidseitig geneigte Flächen aufweisende Schulter auf, wobei der Haltering bei Steck- und Lösevorgang durch die zweite Schulter radial elastisch verformbar und in die Innenausnehmung des Außenteils verdrängbar ist und in einer Vorverriegelungsstellung in die zweite Ausnehmung des Steckzapfens eingreift und dadurch den Steckzapfen im Außenteil festhält und wobei der Dichtring derart im Außen- oder Innenteil angeordnet ist, dass er in der Vorverriegelungsstellung vom jeweils anderen der beiden Teile getrennt ist.

Bei der erfindungsgemäßen Steckverbindung werden durch die Gestaltung der Schultern des Steckzapfens nicht nur die beiden Stellungen, nämlich Verriegelungsstellung und Vorverriegelungsstellung, geschaffen, sondern es wird auch auf einfache Weise das Lösen der Steckverbindung mit Hilfe einer in die Bohrung im Außenteil hineinbewegbaren Entriegelungshülse ermöglicht, indem die Entriegelungshülse beim Lösen der Verriegelungsstellung wie auch beim Lösen der Vorverriegelungsstellung gleichermaßen wirksam ist.

Um die Entriegelungshülse leicht montieren zu können, andererseits aber unverlierbar auf dem Steckzapfen halten zu können, kann erfindungsgemäß der Steckzapfen in Steckrichtung hinter der ersten Ausnehmung eine dritte Schulter und eine sich daran entgegen der Steckrichtung anschließende dritte Ausnehmung haben, die von der Entriegelungshülse überdeckt ist und in die ein nach innen gerichteter Vorsprung eingreift, der nach der Montage der Entriegelungshülse an dieser ausgebildet wird, wobei die axiale Länge der dritten Ausnehmung an den Entriegelungshub der Entriegelungshülse angepasst ist. Auf diese Weise wird eine bewegliche Verbindung zwischen dem Steckzapfen und der Entriegelungshülse geschaffen, die der Entriegelungshülse den erforderlichen Freiheitsgrad in axialer Richtung ermöglicht, wobei jedoch die Herstellung von Steckzapfen und Entriegelungshülse keinen besonders hohen Genauigkeitsanforderungen unterliegt. Vielmehr genügt es, wenn die Hülsenbohrung der Entriegelungshülse und der Außendurchmesser der ersten, zweiten und dritten Schulter des Steckzapfens so bemessen sind, dass die Entriegelungshülse von Hand leicht über die Schultern hinwegbewegbar ist. Der die Entriegelungshülse auf dem Steckzapfen sichernde Vorsprung kann durch eine örtliche radiale Eindrückung der Entriegelungshülse nach ihrer Montage ohne großen Aufwand ausgebildet werden.

Die Erfindung wird nachfolgend anhand von Ausführungsbeispielen näher erläutert, die in der Zeichnung dargestellt sind. Es zeigen
- Figur 1: einen Querschnitt einer erfindungsgemäßen Steckverbindung in der Verriegelungsstellung und
- Figur 2: einen Querschnitt einer weiteren Ausgestaltung der erfindungsgemäßen Steckverbindung und
- Figur 3: einen Querschnitt einer Ausgestaltung der erfindungsgemäßen Steckverbindung mit als Einsatz ausgebildetem Außenteil.

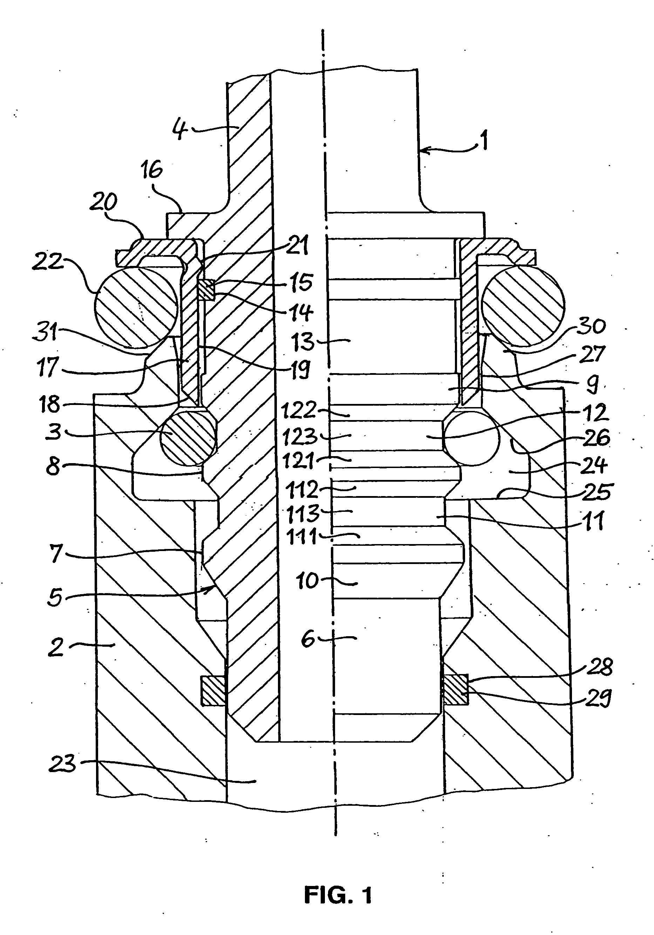

Die in Figur 1 dargestellte Steckverbindung weist ein Innenteil 1 und ein Außenteil 2 auf, die durch einen Haltering 3 lösbar miteinander verbunden sind. Das Innenteil 1 hat eine axiale Durchgangsbohrung und ist an seinem äußeren Ende mit einer Tülle 4 zur Befestigung einer Druckleitung versehen. Das andere in das Außenteil 2 eingesteckte Ende des Innenteils 1 ist als Steckzapfen 5 ausgebildet.

Der Steckzapfen 5 hat einen in Steckrichtung vorderen, zylindrischen Endabschnitt 6, der eine Dichtfläche bildet. An den Endabschnitt 6 schließen sich drei ringförmige Schultern 7, 8, 9 an, deren Außendurchmesser gleich und größer ist als der Außendurchmesser des Endabschnitts 6. Die Schulter 7 hat eine dem Endabschnitt 6 zugewandte Kegelfläche 10, die eine Neigung von etwa 30° zur Längsachse des Steckzapfens 5 hat. Zwischen den Schultern 7 und 8 befindet sich eine Ausnehmung 11 und zwischen den Schultern 8 und 9 eine Ausnehmung 12. Beide Ausnehmungen 11, 12 haben im wesentlichen die gleiche Form und werden von einander gegenüberliegenden, entgegengesetzt geneigten Flächen 111, 112 bzw. 121, 122 und einer dazwischenliegenden, zylindrischen Fläche 113 bzw. 123 begrenzt. Die geneigten Flächen 111, 112, 121, 122 können Kegelflächen aber auch konkav gekrümmte Torusflächenabschnitte sein. An die Schulter 9 schließt sich eine Ausnehmung 13 mit zylindrischer Bodenfläche an, die an einem Ringbund 16 größeren Durchmessers, an den sich die Tülle 4 anschließt, endet. Zwischen der Schulter 9 enthält die Ausnehmung 13 eine einen Dichtring 15 enthaltende Nut 14.

Auf dem sich von der Schulter 9 bis zum Ringbund 16 erstreckenden Abschnitt des Steckzapfens 5 ist axial verschiebbar eine Entriegelungshülse 17 angeordnet, die eine dem Haltering 3 zugekehrte, kegelförmige Stirnfläche 18 hat. Die Stirnfläche 18 ist in einem Winkel von etwa 45° zur Längsachse derart geneigt, dass ihr Durchmesser mit zunehmendem Abstand von dem Haltering 3 wächst. Die Entriegelungshülse 17 weist eine zylindrische Hülsenbohrung 19 und an ihrem dem Ringbund 16 zugekehrten Ende einen radial nach außen gerichteten, ringförmigen Kragen 20 auf. Der Innendurchmesser der Hülsenbohrung 19 und der Außendurchmesser der Schultern 7, 8, 9 sind so aufeinander abgestimmt, dass die Entriegelungshülse 17 von Hand leicht auf den Steckzapfen aufgeschoben werden kann. In der in der Zeichnung gezeigten Ruhestellung liegt die Entriegelungshülse 17 an dem Ringbund 16 an und ihre Hülsenbohrung 19 ist mit dem Dichtring 15 dichtend in Eingriff. In der Nähe der Anlagestelle des Dichtrings 15 ist die Entriegelungshülse 17 mit einem nach innen in die Ausnehmung 13 hineinragenden, kuppenförmigen Vorsprung 21 versehen, der durch eine radiale Verformung der Hülsenwand gebildet ist. Der Vorsprung 21 verhindert, dass die Entriegelungshülse 17 nach ihrer Montage von dem Steckzapfen 5 herabgleiten kann, wenn sich dieser nicht im Außenteil 2 befindet. Auf der Außenseite ist die Entriegelungshülse 17 von einem elastomeren Federelement 22 umgeben, das an dem Kragen 20 und an einem ringförmigen Vorsprung 30 des Außenteils 2 anliegt. Der Vorsprung 30 hat eine kegelförmige Abstützfläche 31, die eine radiale Aufweitung des Federelements 22 bewirkt, wenn das Federelement 22 zum Lösen der Steckverbindung durch die Entriegelungshülse 17 gegen das Außenteil (2) gedrückt wird, wobei der Vorsprung 30 in die Öffnung des Federelements 22 eindringt. Durch das Zusammenwirken des Federelements 22 mit dem Vorsprung 30 wird eine flachere Federkennlinie erreicht und die dem Verschieben des Federelements 22 entgegenwirkende axiale Kraft verringert.

Das Außenteil 2 weist eine durchgehende Aufnahmebohrung 23 auf, deren Innenabmessungen an die Außenabmessungen des Steckzapfens 5 und der Entriegelungshülse 17 angepasst sind. In der Bohrung 23 befindet sich eine ringförmige Ausnehmung 24, in der der Haltering 3 angeordnet ist. Die radiale Tiefe der Ausnehmung 24 ist so bemessen, dass der Haltering 3 beim Stecken oder Lösen des Steckzapfens 5 ungehindert über die Schultern 7, 8 hinweggleiten kann. Die Ausnehmung 24 weist eine zur Längsachse senkrechte, innere Seitenwand 25 und eine äußere, kegelförmige Seitenwand 26 auf. Die Neigung der kegelförmigen Seitenwand 26 kann variiert werden, sie muss aber jeweils gleich oder kleiner sein als die Neigung der Kegelflächen 111 und 121, wenn der Haltering 3 in der Verriegelungsstellung nicht an einer in der Ausnehmung 24 vorgesehenen zylindrischen Fläche radial nach außen abgestützt ist. Bei dem dargestellten Ausführungsbeispiel hat die Seitenwand 26 einen Neigungswinkel von ca. 45°. Zur Einstecköffnung hin schließt sich an die Seitenwand 26 eine zylindrische Bohrungsfläche 27 an, die den kleinsten Innendurchmesser der Seitenwand 26 bestimmt. Zwischen der Bohrungsfläche 27 und der Mantelfläche der Entriegelungshülse 17 ist ein geringes Bewegungsspiel vorgesehen, um das leichte Bewegen der Entriegelungshülse 17 zu gewährleisten. Das innere Ende der Bohrung 23 hat einen an den Endabschnitt 6 angepassten Durchmesser und enthält in einer Ringnut 28 einen Dichtring 29, der in der gezeigten Verriegelungsstellung mit der Dichtfläche des Endabschnitts 6 zusammenwirkt und den Steckzapfen 5 gegenüber dem Außenteil 2 abdichtet. Die axiale Position des Dichtrings 29 ist so auf den Steckzapfen 5 abgestimmt, dass der Endabschnitt 6 den Dichtring 29 nicht erreicht, wenn sich der Steckzapfen 6 in einer Vorverriegelungsstellung befindet, in der der Haltering 3 in die Ausnehmung 11 eingreift.

Der Haltering 3 ist als geschlitzter, elastisch verformbarer Runddraht-Sprengring mit kreisförmigem Runddrahtquerschnitt ausgebildet und kann aus Federstahl, Federbronze oder Kunststoff bestehen. Der Innendurchmesser des entspannten Halterings 3 ist etwas kleiner als der Außendurchmesser der Flächen 113, 123 der Außenausnehmung 11, 12, so dass der Haltering 3 in den Ausnehmungen 11, 12 an den Flächen 113, 123 anliegt und sein Innendurchmesser in diesen Stellungen durch den Durchmesser der Fläche 113, 123 bestimmt wird. Herstellungsbedingte Durchmesserschwankungen des Halterings 3 wirken sich daher beim Eingriff in die Ausnehmungen 11, 12 nicht aus. Der Außendurchmesser des Endabschnitts 6 ist kleiner als der Innendurchmesser des entspannten Halterings 3, damit beim Steckvorgang der Haltering 3 leicht über den Endabschnitt 6 hinweggleiten und durch die Kegelfläche 10 zentriert werden kann.

Vor dem Einstecken des Steckzapfens 5 in die Bohrung 23 des Außenteils 2 befindet sich der Haltering 3 lose in der Ausnehmung 24. Beim Steckvorgang dringt zunächst der Endabschnitt 6 in den Haltering 3 ein und sorgt dadurch für eine Vorzentrierung. Der Haltering 3 gelangt dann in Kontakt mit der Kegelfläche 10 und wird durch diese zentriert, wobei er sich an der Seitenwand 25 der Ausnehmung 24 abstützt. Durch Erhöhung der Steckkraft wird dann die Schulter 7 durch den Haltering 3 hindurchgeschoben, wobei dieser durch die Kegelfläche 10 aufgeweitet wird und nach Überwinden der Schulter 7 in die Ausnehmung 11 einrastet. In dieser Vorverriegelungsstellung ist der Steckzapfen 5 bereits sicher durch den Haltering 3 im Außenteil 2 festgehalten. Der Steckzapfen 5 ist aber noch nicht gegenüber dem Außenteil 2 abgedichtet. Bei Druckbeaufschlagung der an das Innenteil 1 und das Außenteil 2 angeschlossenen Leitungen kann daher Druckmittel entweichen und damit das unvollständige Zusammenstecken der Steckverbindung anzeigen.

Aus der Vorverriegelungsstellung wird der Steckzapfen 5 durch tieferes Hineindrücken in das Außenteil 2 in die in der Zeichnung dargestellte Verriegelungsstellung gebracht. Der Haltering 3 wird bei diesem Vorgang mit Hilfe der geneigten Fläche 112 erneut so weit aufgeweitet, dass er über die Schulter 8 hinweggleiten und dann in die Ausnehmung 12 einrasten kann. Während der Endphase diese Vorgangs wird das Federelement 22 in axialer Richtung leicht gespannt, so dass es den Steckzapfen 5 in der dargestellten Verriegelungsstellung hält. In dieser Stellung ist der Haltering 3 zwischen der geneigten Fläche 121 und der Seitenwand 26 eingeklemmt, wobei die aufeinander abgestimmten Neigungen der Fläche 121 und der Seitenwand 26 dafür sorgen, dass der Haltering 3 in der dargestellten Lage verbleibt. Unterliegt die Steckverbindung einer starken Schwingungsbeanspruchung, so kann der Haltering 3 auch durch eine an der Seitenwand 24 angebrachte, ihn außen umgreifende Schulter formschlüssig in dieser Lage gesichert sein.

Zum Lösen der Steckverbindung wird unter Verformung des Federelements 22 die Entriegelungshülse 17 in das Außenteil 2 hineingedrückt und der Haltering 3 von der Seitenwand 26 abgehoben. Gleichzeitig wird an dem Steckzapfen entgegen der Einsteckrichtung gezogen. Dies hat zur Folge, dass der Haltering 3 zunächst durch die geneigte Fläche 121 und die Stirnfläche 18 aufgeweitet und in eine Stellung in der Ausnehmung 24 bewegt wird, in der er über die Schulter 8 hinweggleiten kann. Während die Entriegelungshülse 17 in dieser eingedrückten Stellung gehalten wird, kann der Steckzapfen 5 mit den Schultern 8 und 7 durch den Haltering 3 hindurchgezogen und dann zusammen mit der Entriegelungshülse 17 vollständig aus dem Außenteil 2 herausgezogen werden.

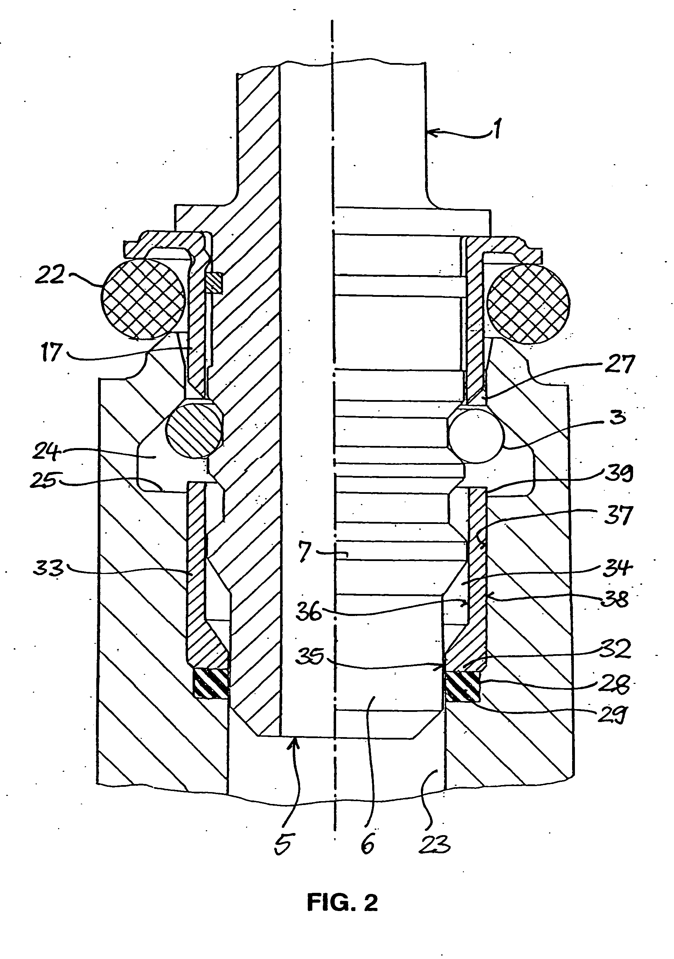

Figur 2 zeigt eine Steckverbindung, die bis auf die Gestaltung des Außenteils 2 mit der Steckverbindung gemäß Figur 1 übereinstimmt. Zur Vereinfachung der spanabhebenden Bearbeitung des Außenteils 2 ist bei dieser Ausgestaltung die den Dichtring 29 nach außen abstützende Seitenwand 32 der Ringnut 28 von einer Hülse 33 gebildet, die in die Bohrung 23 des Außenteils 2 eingesetzt ist. Die Hülse 33 hat eine gestufte Bohrung 34 mit einem an die Seitenwand 32 angrenzenden, engeren Abschnitt 35 und einem weiteren Abschnitt 36. Der Innendurchmesser des engeren Abschnitts 35 ist an den Außendurchmesser des Endabschnitts 6 des Steckzapfens 5 und der Innendurchmesser des weiteren Abschnitts 36 ist an den Außendurchmesser der Schulter 7 des Steckzapfens 5 angepasst. Zur Aufnahme der Hülse 33 ist die Bohrung 23 im Außenteil 2 zwischen der Ausnehmung 24 und der Ringnut 28 mit einem zylindrischen Bohrungsabschnitt 37 versehen, der den gleichen Innendurchmesser hat wie die auf der Eingangsseite der Ausnehmung 24 liegende Bohrungsfläche 27. Die Hülse 33 hat eine zylindrische Mantelfläche 38, mit der sie in dem Bohrungsabschnitt 37 gelagert ist, wobei der Außendurchmesser der Mantelfläche 38 so bemessen ist, dass die Hülse 33 mühelos in das Außenteil 2 eingeschoben werden kann. Der Innendurchmesser des Bohrungsabschnitts 37 ist geringfügig größer als der Innendurchmesser der Ringnut 28, so dass am Übergang vom Bohrungsabschnitt 37 in die Ringnut 28 eine Stufe gebildet ist, die das Eindringen der Hülse 33 in die Ringnut 28 verhindert. Hierdurch wird erreicht, dass der Dichtring 29 durch eine beim Steckvorgang auf die Hülse 33 einwirkende Axialkraft nicht zusammengedrückt werden und dadurch den Steckvorgang behindern kann. Das der Seitenwand 32 entgegengesetzte Ende 39 der Hülse 33 befindet sich an der inneren Seitenwand 25 der Ausnehmung 24 in einem solchen Abstand von dem Haltering 3, dass dessen radiale Bewegbarkeit nicht eingeschränkt wird.

Durch die beschriebene Gestaltung wird die spanabhebende Bearbeitung des Außenteils 2 vereinfacht, da die Bohrungsfläche 27 und der Bohrungsabschnitt 37 in einem Bearbeitungsgang bearbeitet werden können und die Ringnut 28 keinen Einstechvorgang, sondern lediglich eine Verlängerung des Bohrungsabschnitts 37 mit verringertem Durchmesser erfordert. Die Vereinfachung der Bearbeitung ist vor allem dann von Bedeutung, wenn das Außenteil integraler Bestandteil eines Gerätegehäuses ist, das nicht als Drehteil in einem Drehautomaten bearbeitet werden kann. Die Hülse 33 bewirkt außerdem eine Vereinfachung der Montage, da der Dichtring 29 vor der Montage der Hülse 33 ohne nennenswerte Verformung und ohne Widerstand bis in die Ringnut 28 bewegt werden kann.

Figur 2 zeigt die Steckverbindung unmittelbar nach der Montage in Verriegelungsstellung. Wird die Steckverbindung mit Druck beaufschlagt, so werden durch den einwirkenden Druck der Dichtring 29 und die Hülse 33 in Richtung des Halterings 3 verschoben, bis die Hülse 33 sich an dem Haltering 3 abstützt. Der Dichtring 29 ist hierbei so ausgelegt, dass er in dem im Vergleich zur Ringnut 28 nur geringfügig größeren Bohrungsabschnitt 37 gleichermaßen wirksam dichtet. Die an dem Haltering 3 abgestützte Druckkraft trägt zur sicheren Fixierung des Halterings in der Verriegelungsstellung bei. Zudem wird der Steckzapfen 5 durch das Federelement 22 mit einer definierten Vorspannkraft in der Verriegelungsstellung gehalten.

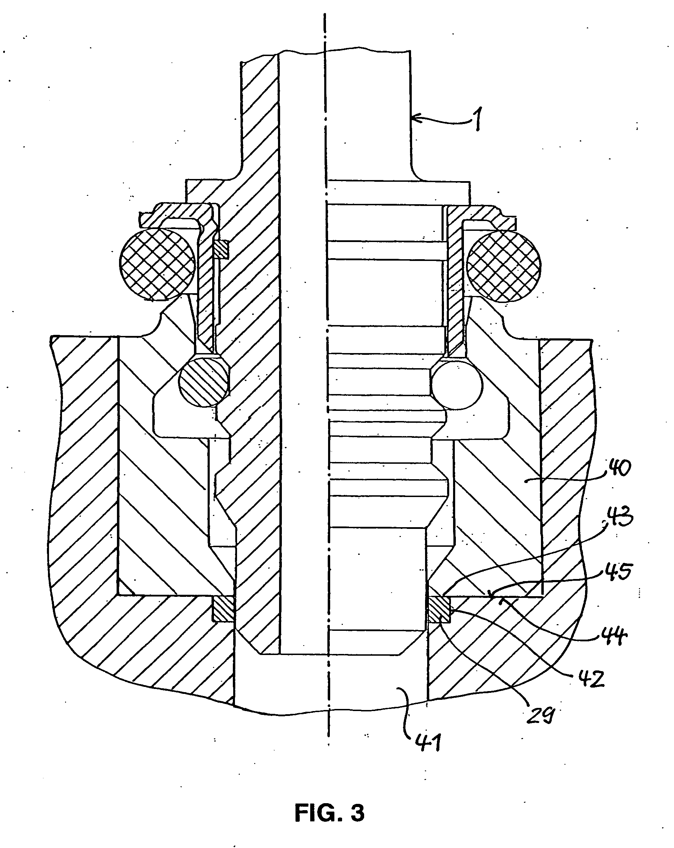

Figur 3 zeigt eine Ausgestaltung der Steckverbindung, bei der das Außenteil als hülsenförmiger Einsatz 40 zum Einpressen in eine Gehäusebohrung 41 ausgebildet ist. Der Einsatz 40 weist eine zylindrische Mantelfläche auf, deren Durchmesser zur Bildung eines Presssitzes an den Innendurchmesser der Gehäusebohrung 41 angepasst ist. Die Besonderheit dieser Ausgestaltung besteht darin, dass der Dichtring 29 zur Abdichtung des Steckzapfens 5 gegenüber dem Gehäuse nicht in dem Einsatz 40, sondern in einer in der Gehäusebohrung 41 ausgebildeten Ringnut 42 angeordnet ist, wobei die Ringnut 42 als eine zur Einstecköffnung der Gehäusebohrung 41 offene Ausnehmung ausgebildet ist, die einfach hergestellt werden kann. Die äußere Seitenwand 43, die die Ringnut 42 nach außen begrenzt und an der der Dichtring 29 abgestützt ist, wird von einer Stirnfläche 44 gebildet, mit der sich der Einsatz 40 an einer an die Ringnut 42 angrenzenden Stufenfläche 45 der Gehäusebohrung 41 abstützt. Diese Ausführungsform hat den Vorteil, dass sich sowohl der Einsatz 40 als auch die Gehäusebohrung 41 kostengünstig herstellen lassen und die Montage des Dichtrings 29, die zweckmäßigerweise vor dem Einpressen des Einsatzes erfolgt, erleichtert wird.

Als Alternative hierzu kann der Einsatz auch als Einschraubteil ausgebildet sein, wobei zumindest ein Teil seiner Mantelfläche und zumindest ein Teil der Gehäusebohrung mit einem Gewinde versehen wird.

## Patentansprüche

1. Lösbare Steckverbindung für Rohrleitungen mit
einem Außenteil (2), das eine Bohrung (23) mit einem offenen Einsteckende und eine die Bohrung unterteilende, ringförmige Innenausnehmung (24) hat, die von einer inneren Seitenwand (25) und einer äußeren, kegelförmigen Seitenwand (26) begrenzt wird,
einem mit einer Durchgangsbohrung versehenen Innenteil (1) mit einem in die Bohrung (23) des Außenteils (2) einsteckbaren Steckzapfen (5), der eine erste ringförmige Außenausnehmung (12) hat, die auf der in Steckrichtung vorderen Seite von einer ringförmigen, beidseitig geneigte Flächen (121, 122) aufweisenden ersten Schulter (8) des Steckzapfens (5) begrenzt wird,
einem elastisch aufweitbaren Haltering (3), der in der Innenausnehmung (24) des Außenteils (2) angeordnet ist und dessen Innendurchmesser kleiner ist als der Außendurchmesser der ersten Schulter (8), wobei der Haltering (3) beim Steck- und Lösevorgang durch die erste Schulter (8) radial elastisch verformbar und in die Innenausnehmung (24) des Außenteils (2) verdrängbar ist und in der Verriegelungsstellung in die erste Außenausnehmung (12) des Steckzapfens (5) eingreift, wodurch er den Steckzapfen (5) im Außenteil (2) festhält,
einer Entriegelungshülse (17), die durch den auf der Einsteckseite der Innenausnehmung (24) befindlichen Abschnitt der Bohrung (23) des Außenteils (2) in die Innenausnehmung (24) hinein bewegbar ist,
einem Dichtring (29), der in der Verriegelungsstellung das Außenteil (2) gegen das Innenteil (1) abdichtet,
**dadurch gekennzeichnet,**
**dass** der Steckzapfen (5) in Steckrichtung vor der ersten Schulter (8) eine zweite ringförmige Ausnehmung (11) und vor dieser eine zweite ringförmige, beidseitig geneigte Flächen aufweisende Schulter (7) hat, wobei der Haltering (3) beim Steck- und Lösevorgang durch die zweite Schulter (7) radial elastisch verformbar und in die Innenausnehmung (24) des Außenteils (2) verdrängbar ist und, nachdem er die zweite Schulter (7) passiert hat, in einer Vorverriegelungsstellung in die zweite Außenausnehmung (11) des Steckzapfens (5) eingreift und den Steckzapfen (5) im Außenteil (2) festhält, und
**dass** der Dichtring (29) derart am Außenteil (2) oder am Innenteil (1) angeordnet ist, dass er in der Vorverriegelungsstellung nicht in einen dichtenden Kontakt mit dem Innenteil (1) bzw. Außenteil (2) gelangt.

2. Steckverbindung nach Anspruch 1, **dadurch gekennzeichnet, dass** der Haltering (3) in der Vorverriegelungsstellung und in der Verriegelungsstellung an der äußeren, kegelförmigen Seitenwand (26) der Innenausnehmung (24) im Außenteil (2) und an einer zylindrischen Fläche (113 bzw. 123) der zweiten oder ersten Außenausnehmung (11, 12) des Steckzapfens (5) anliegt.

3. Steckverbindung nach einem der Ansprüche 1 oder 2, **dadurch gekennzeichnet, dass** der Steckzapfen (5) in Steckrichtung hinter der ersten Ausnehmung (13) eine dritte Schulter (9) und eine sich daran in Steckrichtung nach hinten anschließende dritte Ausnehmung (13) hat, die von der Entriegelungshülse (17) überdeckt ist und in die ein nach innen gerichteter Vorsprung (21) der Entriegelungshülse (17) eingreift, wobei die axiale Länge der dritten Ausnehmung (13) an den Entriegelungshub der Entriegelungshülse (17) angepasst ist.

4. Steckverbindung nach einem der vorhergehenden Ansprüche, **dadurch gekennzeichnet, dass** die Hülsenbohrung (19) der Entriegelungshülse (17) und die Außendurchmesser der ersten, zweiten und dritten Schulter (8, 7, 9) des Steckzapfens (5) so bemessen sind, dass die Entriegelungshülse (17) von Hand über die Schultern (8, 7, 9) bewegbar ist.

5. Steckverbindung nach einem der vorhergehenden Ansprüche, **dadurch gekennzeichnet, dass** der Außendurchmesser der in der Bohrung (23) des Außenteils (2) befindlichen Entriegelungshülse (17) um das erforderliche Bewegungsspiel kleiner ist als die sie umgebende Bohrungsfläche (27) des Außenteils (2).

6. Steckverbindung nach einem der vorhergehenden Ansprüche, **dadurch gekennzeichnet, dass** die Entriegelungshülse (17) eine dem Haltering (3) zugekehrte, kegelförmige Stirnfläche (18) hat, die sich zum Hülsenende hin verjüngt.

7. Steckverbindung nach einem der vorhergehenden Ansprüche, **dadurch gekennzeichnet, dass** der Haltering (3) ein geschlitzter Ring ist, der aus einem im Querschnitt kreisförmigen Draht aus Federmaterial, z.B. Federstahl, Federbronze oder Kunststoff besteht.

8. Steckverbindung nach einem der vorhergehenden Ansprüche, **dadurch gekennzeichnet, dass** an dem Innenteil (1) einerseits und dem Außenteil (2) andererseits ein in der Verriegelungsstellung in axialer Richtung vorgespanntes Federelement (22) abgestützt ist.

9. Steckverbindung nach Anspruch 8, **dadurch gekennzeichnet, dass** das Federelement (22) in axialer Richtung an einem Kragen (20) der Entriegelungshülse (17) abgestützt ist.

10. Steckverbindung nach einem der Ansprüche 8 oder 9, **dadurch gekennzeichnet, dass** das Federelement (22) in axialer Richtung an einem Vorsprung (30) des Außenteils (2) abgestützt ist, wobei der Vorsprung (30) eine kegelförmige Abstützfläche (31) aufweist, die eine radiale Aufweitung des Federelements bewirkt, wenn die Entriegelungshülse (17) zum Lösen der Steckverbindung in das Außenteil (2) hineingedrückt wird.

11. Steckverbindung nach einem der vorhergehenden Ansprüche, **dadurch gekennzeichnet, dass** der Dichtring (29) in einer Ringnut (28) im Außenteil (2) angeordnet ist, wobei die den Dichtring (29) nach außen abstützende Seitenwand (32) der Ringnut (28) von einer in die Bohrung (23) des Außenteils (2) eingesetzten Hülse (33) gebildet wird, die sich an dem Haltering (3) nach außen abstützt.

12. Steckverbindung nach dem vorhergehenden Anspruch, **dadurch gekennzeichnet, dass** der Außendurchmesser der Hülse (33) dem Außendurchmesser der Entriegelungshülse (17) entspricht.

13. Steckverbindung nach Anspruch 11, **dadurch gekennzeichnet, dass** die Hülse mittels Presssitz in der Bohrung befestigt ist.

14. Steckverbindung nach dem vorhergehenden Anspruch, **dadurch gekennzeichnet, dass** das Außenteil eine hülsenförmiger Einsatz (40) ist, der zum Einpressen oder Einschrauben in eine Gehäusebohrung (41) ausgebildet ist.

15. Steckverbindung nach Anspruch 14, **dadurch gekennzeichnet, dass** der hülsenförmige Einsatz (40) die äußere Seitenwand (43) einer in der Gehäusebohrung (41) ausgebildeten Ringnut (42) für einen Dichtring (29) bildet.

## Claims

1. Releasable plug-in coupling for pipes, comprising:
an outer part (2), which has a bore (23) with an open plug-in end, and has an annular inner recess (24), which divides said bore and is delimited by an inner side wall (25) and an outer, conical side wall (26),
an inner part (1), which is provided with a through-hole and comprises a plug (5), which can be plugged into the bore (23) of the outer part (2) and has a first annular outer recess (12), which is delimited, on the leading side in the direction of plugging, by an annular first shoulder (8), having inclined surfaces (121, 122) on both sides, of the plug (5),
a resiliently expandable holding ring (3), which is arranged in the inner recess (24) of the outer part (2), and the inner diameter of which is smaller than the outer diameter of the first shoulder (8), the holding ring (3) being radially resiliently deformable through the first shoulder (8) and displaceable into the inner recess (24) of the outer part (2) during the plugging or release, and engaging with the first outer recess (12) of the plug (5) in the locking state, thus holding the plug (5) in the outer part (2),
an unlocking sleeve (17), which can be moved into the inner recess (24) through the portion, disposed on the plugging side of the inner recess (24), of the bore (23) of the outer part (2), a sealing ring (29), which seals the outer part (2) from the inner part (1) in the locking state,
**characterised**
**in that** the plug (5) has, ahead of the first shoulder (8) in the direction of plugging, a second annular recess (11), and ahead of this, a second annular shoulder (7) which has inclined surfaces on both sides, the holding ring (3) being radially resiliently deformable through the second shoulder (7) and displaceable into the inner recess (24) of the outer part (2) during the plugging or release and, after passing the second shoulder (7), engaging with the second outer recess (11) of the plug (5) in a pre-locking state and holding the plug (5) in the outer part (2), and
**in that** the sealing ring (29) is arranged on the outer part (2) or on the inner part (1) in such a way that said sealing ring does not come into a sealing contact with the inner part (1) or outer part (2) in the pre-locking state.

2. Plug-in coupling according to claim 1, **characterised in that** in the pre-locking state and in the locking state, the holding ring (3) lies against the outer, conical side wall (26) of the inner recess (24) in the outer part (2) and against a cylindrical surface (113 or 123) of the second or first outer recess (11, 12) of the plug (5).

3. Plug-in coupling according to either claim 1 or claim 2, **characterised in that** the plug (5) has, behind the first recess (13) in the direction of plugging, a third shoulder (9) and a third recess (13) connected thereto, rearwards in the plugging direction, which third recess is covered by the unlocking sleeve (17) and engages with an inwardly directed projection (21) of the unlocking sleeve (17), the axial length of the third recess (13) being adapted to the unlocking distance of the unlocking sleeve (17).

4. Plug-in coupling according to any one of the preceding claims, **characterised in that** the sleeve bore (19) of the unlocking sleeve (17) and the outer diameter of the first, second, and third shoulders (8, 7, 9) of the plug (5) are dimensioned in such a way that the unlocking sleeve (17) can be moved over the shoulders (8, 7, 9) by hand.

5. Plug-in coupling according to any one of the preceding claims, **characterised in that** the outer diameter of the unlocking sleeve (17), which is disposed in the bore (23) of the outer part (2), is smaller than the surrounding bore surface (27) of the outer part (2) by the necessary clearance for movement.

6. Plug-in coupling according to any one of the preceding claims, **characterised in that** the unlocking sleeve (17) has a conical front surface (18) which faces towards the holding ring (3) and tapers towards the end of the sleeve.

7. Plug-in coupling according to any one of the preceding claims, **characterised in that** the holding ring (3) is a slotted ring consisting of a wire, which is circular in cross-section and is made of resilient material, e.g. spring steel, phosphor bronze or plastics material.

8. Plug-in coupling according to any one of the preceding claims, **characterised in that** a spring element (22), which is pre-stressed in the axial direction in the locking state, rests, on the one hand, against the inner part (1), and on the other hand, against the outer part (2).

9. Plug-in coupling according to claim 8, **characterised in that** the spring element (22) rests in the axial direction against a collar (20) of the unlocking sleeve (17).

10. Plug-in coupling according to either claim 8 or claim 9, **characterised in that** the spring element (22) rests in the axial direction against a projection (30) of the outer part (2), the projection (30) having a conical supporting surface (31), which causes a radial expansion of the spring element when the unlocking sleeve (17) is pushed into the outer part (2) in order to release the plug-in coupling.

11. Plug-in coupling according to any one of the preceding claims, **characterised in that** the sealing ring (29) is arranged in an annular groove (28) in the outer part (2), whilst the side wall (32) of the annular groove (28) externally supports the sealing ring (29) and is formed from a sleeve (33), which is inserted in the bore (23) of the outer part (2) and rests externally against the holding ring (3).

12. Plug-in coupling according to the preceding claim, **characterised in that** the outer diameter of the sleeve (33) corresponds to the outer diameter of the unlocking sleeve (17).

13. Plug-in coupling according to claim 11, **characterised in that** the sleeve is fixed in the bore by means of an interference fit.

14. Plug-in coupling according to the preceding claim, **characterised in that** the outer part is a sleeve-shaped insert (40) which is formed such that it can be pressed or screwed into a housing bore (41).

15. Plug-in coupling according to claim 14, **characterised in that** the sleeve-shaped insert (40) forms the outer side wall (43) of an annular groove (42), formed in the housing bore (41), for a sealing ring (29).

## Revendications

1. Assemblage par enfichage réversible destiné à des conduites, comportant :
un élément externe (2), qui présente un alésage (23) avec une extrémité d'enfichage ouverte et un évidement interne (24) annulaire, subdivisant l'alésage et délimité par une paroi latérale interne (25) et une paroi latérale externe (26) conique,
un élément interne (1) doté d'un alésage de passage, comportant un tenon d'enfichage (5) pouvant être enfiché dans l'alésage (23) de l'élément externe (2) et qui a un premier évidement externe (12) annulaire délimité, sur la face avant dans le sens d'enfichage, par un premier épaulement (8) du tenon d'enfichage (5), présentant des surfaces annulaires (121, 122) inclinées des deux côtés,
une bague de maintien (3) pouvant être élargie de manière élastique, qui est disposée dans l'évidement interne (24) de l'élément externe (2), et dont le diamètre interne est inférieur au diamètre externe du premier épaulement (8), la bague de maintien (3) pouvant être déformée de manière élastique radialement par le premier épaulement (8) lors de l'opération d'enfichage et de dégagement, et pouvant être poussée dan l'évidement interne (24) de l'élément externe (2), et s'engrenant dans le premier évidement externe (12) du tenon d'enfichage (5) dans la position de verrouillage, maintenant de ce fait le tenon d'enfichage (5) dans l'élément externe (2),
une douille de déverrouillage (17) qui peut se déplacer à l'intérieur de l'évidement interne (24), en passant au travers de la section de l'alésage (23) de l'élément externe (2) qui se trouve sur la face d'enfichage de l'évidement interne (24),
une bague d'étanchéité (29) qui, dans la position de verrouillage, étanchéifie l'élément externe (2) par rapport à l'élément interne (1),
**caractérisé en ce que**
le tenon d'enfichage (5) présente devant le premier épaulement (8), dans le sens d'enfichage, un deuxième évidement annulaire (11), et devant celui-ci, un deuxième épaulement annulaire (7) présentant des surfaces inclinées des deux côtés, la bague de maintien (3), lors de l'opération d'enfichage et de dégagement, pouvant être déformée élastiquement radialement par le deuxième épaulement (7), et pouvant être poussée dans l'évidement interne (24) de l'élément externe (2), et, une fois qu'il a passé le deuxième épaulement (7), s'engrenant dans le deuxième évidement externe (11) du tenon d'enfichage (5) dans une position de préverrouillage, et maintenant le tenon d'enfichage (5) dans l'élément externe (2), et
**en ce que** la bague d'étanchéité (29) est disposée de telle sorte sur l'élément externe (2) ou sur l'élément interne (1) qu'elle n'entre pas en contact d'étanchéité avec l'élément interne (1) ou l'élément externe (2) dans la position de préverrouillage.

2. Assemblage par enfichage selon la revendication 1, **caractérisé en ce que** la bague de maintien (3), dans la position de préverrouillage et dans la position de verrouillage, repose sur la paroi latérale externe conique (26) de l'évidement interne (24) dans l'élément externe (2), et sur une surface cylindrique (113 respectivement 123) du deuxième ou du premier évidement externe (11, 12) du tenon d'enfichage (5).

3. Assemblage par enfichage selon l'une des revendications 1 ou 2, **caractérisé en ce que** le tenon d'enfichage (5) présente, derrière le premier évidement (***12***) dans le sens d'enfichage, un troisième épaulement (9) et un troisième évidement (13) suivant celui-ci vers l'arrière dans le sens d'enfichage, lequel troisième évidement est recouvert par la douille de déverrouillage (17) et dans lequel s'engrène une saillie (21) de la douille de déverrouillage (17) orientée vers l'intérieur, la longueur axiale du troisième évidement (13) étant adaptée à la course de déverrouillage de la douille de déverrouillage (17).

4. Assemblage par enfichage selon l'une des revendications précédentes, **caractérisé en ce que** l'alésage de douille (19) de la douille de déverrouillage (17) et le diamètre externe des premier, deuxième et troisième épaulements (8, 7, 9) du tenon d'enfichage (5) sont dimensionnés de telle sorte que la douille de déverrouillage (17) peut être déplacée à la main par-dessus des épaulements (8, 7, 9).

5. Assemblage par enfichage selon l'une des revendications précédentes, **caractérisé en ce que** le diamètre externe de la douille de déverrouillage (17) qui se trouve dans l'alésage (23) de l'élément externe (2) est plus petit du jeu nécessaire au déplacement par rapport à la surface d'alésage (27) qui l'entoure de l'élément externe (2).

6. Assemblage par enfichage selon l'une des revendications précédentes, **caractérisé en ce que** la douille de déverrouillage (17) présente une surface frontale (18) conique, orientée vers la bague de maintien (3) qui se rétrécit vers l'extrémité de la douille.

7. Assemblage par enfichage selon l'une des revendications précédentes, **caractérisé en ce que** la bague de maintien (3) est une bague fendue qui est constituée d'un fil de section circulaire réalisé dans un matériau à ressort, par exemple, dans de l'acier à ressort, dans du bronze à ressort ou dans une matière plastique.

8. Assemblage par enfichage selon l'une des revendications précédentes, **caractérisé en ce qu'**un élément élastique (22) précontraint en direction axiale dans la position de verrouillage s'appuie sur l'élément interne (1) d'une part et sur l'élément externe (2) d'autre part.

9. Assemblage par enfichage selon la revendication 8, **caractérisé en ce que** l'élément élastique (22) s'appuie sur un collet (20) de la douille de déverrouillage (17) en direction axiale.

10. Assemblage par enfichage selon la revendication 8 ou 9, **caractérisé en ce que** l'élément élastique (22) s'appuie sur une saillie (30) de l'élément externe (2) en direction axiale, la saillie (30) présentant une surface d'appui (31) conique, qui provoque un élargissement radial de l'élément élastique lorsque la douille de déverrouillage (17) est enfoncée à l'intérieur de l'élément externe (2) afin de libérer l'assemblage par enfichage.

11. Assemblage par enfichage selon l'une des revendications précédentes, **caractérisé en ce que** la bague d'étanchéité (29) est disposée dans une rainure annulaire (28) dans l'élément externe (2), la paroi latérale (32) de la rainure annulaire (28) soutenant vers l'extérieur la bague d'étanchéité (29) étant formée par une douille (33) insérée dans l'alésage (23) de l'élément externe (2) et qui s'appuie vers l'extérieur sur la bague d'étanchéité (3).

12. Assemblage par enfichage selon l'une des revendications précédentes, **caractérisé en ce que** le diamètre externe de la douille (33) correspond au diamètre externe de la douille de déverrouillage (17).

13. Assemblage par enfichage selon la revendication 11, **caractérisé en ce que** la douille est fixée dans l'alésage par ajustement sans jeu.

14. Assemblage par enfichage selon l'une des revendications précédentes, **caractérisé en ce que** l'élément externe est un insert (40) en forme de douille configuré pour être enfoncé ou vissé dans un alésage de boîtier (41).

15. Assemblage par enfichage selon la revendication 14, **caractérisé en ce que** l'insert (40) en forme de douille forme la paroi latérale externe (43) d'une rainure annulaire (42) ménagée dans l'alésage de boîtier (41) et destinée à une bague d'étanchéité (29).
